# EUROPÄISCHE PATENTSCHRIFT

(11) **EP 2 705 229 B1**
(45) Veröffentlichungstag und Bekanntmachung des Hinweises auf die Patenterteilung: **20.01.2016**
(21) Anmeldenummer: 12708022.4
(22) Anmeldetag: 09.03.2012
(51) Int. Cl.: F01N 3/20

(54) **INJEKTOR ZUR DOSIERUNG VON REDUKTIONSMITTEL ZUM ABGAS EINER BRENNKRAFTMASCHINE**
INJECTOR FOR METERING REDUCING AGENT TO THE EXHAUST GAS OF AN INTERNAL COMBUSTION ENGINE
INJECTEUR POUR DOSER UN AGENT RÉDUCTEUR DANS LES GAZ D'ÉCHAPPEMENT D'UN MOTEUR À COMBUSTION INTERNE

(30) Priorität: 06.05.2011 DE 102011075381
(43) Veröffentlichungstag der Anmeldung: 12.03.2014
(73) Patentinhaber: Robert Bosch GmbH, 70442 Stuttgart (DE)
(72) Erfinder: KIONTKE, Martin, 71254 Ditzingen (DE); MEINGAST, Ulrich, 70499 Stuttgart (DE)
(86) Internationale Anmeldenummer: PCT/EP2012/054079
(87) Internationale Veröffentlichungsnummer: WO 2012/152466

(56) Entgegenhaltungen:
- EP-A1- 2 388 452
- WO-A2-2008/040363
- DE-A1-102009 028 030

## Beschreibung

### Stand der Technik

Die Erfindung betrifft einen Injektor zur Dosierung von Reduktionsmittel zum Abgas einer Brennkraftmaschine.

Es ist bekannt, dass der Stickoxidgehalt im Abgas einer Brennkraftmaschine durch eine selektive katalytische Reduktion (SCR) verringert werden kann. Dazu wird dem Abgas eine unmittelbar reduzierend wirkende Substanz wie Ammoniak oder ein Vorprodukt zugeführt, welches erst im Abgas reduzierende Substanzen freisetzt. Als Vorprodukt kann beispielsweise eine Harnstoff-Wasser-Lösung verwendet werden. Ammoniak wird bei der selektiven katalytischen Reduktion mit Stickstoffmonoxid und Stickstoffdioxid zu molekularem Stickstoff und Wasser umgewandelt. Die selektive katalytische Reduktion findet in einem SCR-Katalysator statt.

Die Einbringung des Reduktionsmittels, beispielsweise der Harnstoff-Wasser-Lösung, in das Abgas erfolgt über einen elektrisch ansteuerbaren Injektor. Dieser umfasst wiederum eine Befestigungseinrichtung, mit deren Hilfe der Injektor an einem Flansch eines Abgasrohrs befestigt ist. Der Injektor spritzt das Reduktionsmittel auf diese Weise direkt in das Abgasrohr, stromaufwärts, vor dem SCR-Katalysator, ein.

Solche Injektoren sind beispielsweise aus der DE 10 2007 013 524 A1 bekannt. Um die Funktionsfähigkeit des Injektors zu gewährleisten, ist es auch bekannt, diesen mit einem Kühlkörper zu umgeben, der von einem Kühlmittelteilstrom der Brennkraftmaschine durchflossen wird. Damit ist gewährleistet, dass der Injektorkeinen unzulässig hohen Temperaturen ausgesetzt ist.

Aus der DE 103 32 114 A1, ist ein Injektor bekannt, dessen in das Abgas ragender Teil wenigstens teilweise durch eine gegen den Abgasstrom thermisch isolierende Abschirmung abgedeckt ist. Diese Abschirmung hat die Aufgabe, den Wärmeeintrag in das Einspritzventil zu verringern, um den Kühlleistungsbedarf zu reduzieren.

Weil jedoch die in das Abgasrohr hineinragenden Flächen der Injektoren, vor allem kurz nach dem Kaltstart der Brennkraftmaschine, relativ kalt sind, kann es vorkommen, dass bereits in den Abgasstrom eingespritztes dampfförmiges Reduktionmittel an den (noch) kühlen Flächen des Kühlkörpers kondensiert und sich dort als Feststoff ablagert. Diese Ablagerungen können die Funktionsfähigkeit des Injektors beeinträchtigen, beispielsweise durch Beeinflussung des Spraybildes. Außerdem ist es auch möglich, dass sich Ablagerung ablösen und vom Abgasstrom mitgerissen werden. Dabei kann es zu Beschädigungen an stromabwärts angeordneten Bauteilen des Abgasstrangs kommen. Daher sind auch diese Ablagerungen unerwünscht.

Aus der DE 10 2009 028 030 ist eine Montageeinheit zur Befestigung eines Einspritzorgans mit einer einen Luftspalt umfassenden Dichteinheit bekannt.

### Offenbarung der Erfindung

Das der Erfindung zugrunde liegende Problem wird durch eine Vorrichtung nach Anspruch 1 gelöst.

Die Erfindung trifft insbesondere wassergekühlte Injektoren, ist aber nicht auf diese beschränkt.

Eine einfache und kostengünstige Lösung besteht darin, die kühlen Flächen des Injektors mit einem Hitzeschild so abzuschirmen, dass ein Kontakt mit dem dampfförmigen Reduktionsmittel im Abgasstrang verhindert oder zumindest minimiert wird.

Dazu wird der gesamte Bereich des Kühlkörpers, der in das Abgasrohr hineinragt, von einem, beispielsweise durch Tiefziehen hergestellten, topfförmigen Hitzeschild umgeben, dessen Oberfläche gegenüber dem Kühlkörper eine höhere Temperatur aufweist, so dass das dampfförmige Reduktionsmittel im Abgas nicht kondensiert, wenn es in Kontakt mit dem Hitzeschild gelangt. Wenn der Hitzeschild eine ausreichend hohe Temperatur hat, wird das Reduktionsmittel zersetzt und kann keine Ablagerungen bilden. Dazu ist es erforderlich, den Hitzeschild so auszugestalten, dass er den Kühlkörper vollständig umschließt und trotzdem eine Kontaktfläche zwischen Kühlkörper und Hitzeschild minimiert wird, so dass die Wärmeleitung reduziert und damit eine ungewollte Kühlung des Hitzeschildes verhindert wird. Das gelingt beispielsweise, indem der Hitzeschild einen Mindestabstand zum Kühlkörper von mindestens 1 mm einhält.

Dabei ist vorgesehen, dass der Hitzeschild über eine Vielzahl radial angeordneter Ablauföffnungen verfügt. Dadurch kann zwischen Hitzeschild und Kühlkörper eingedrungenes Reduktionsmittel wieder ablaufen.

Ferner ist vorgesehen, dass die Ausnehmungen in einer Stirnseite oder an einem Umfang des Hitzeschilds angeordnet sind. Eine radiale Anordnung in einem äußeren Bereich der Stirnseite bzw. am Boden oder an einem unteren, dem Abgasrohr zugewandten Ende des Hitzeschild respektive des Behältermantels, erlaubt ein Ablaufen des eingedrungenen Reduktionsmittels unabhängig von einer Einbaulage des Injektors.

Eine bevorzugte Ausgestaltung der Erfindung sieht vor, dass der Hitzeschild am Kühlkörper mittelbar oder unmittelbar befestigt ist. Dadurch kann der Hitzeschild bzw. der Behälter besonders einfach und kostengünstig beispielsweise durch laserschweißen dauerhaft mit dem Injektor verbunden werden. Somit sind keine aufwändigen konstruktiven Änderungen am Abgasrohr, an der Befestigungseinrichtung oder am Injektor selbst erforderlich.

Weil der Hitzeschild direkt am Kühlkörper befestigt wird und der Kühlkörper eine niedrige Temperatur aufweist, muss die Wärmeleitung zwischen Kühlkörper und Hitzeschild reduziert werden, um eine ausreichend hohe Betriebstemperatur des Hitzeschilds zu gewährleistenDeshalb werden dort, wo ein direkter Kontakt zwischen Kühlkörper und Hitzeschild unumgänglich ist, d. h. an einem oberen Rand, der mit dem Kühlkörper, wie bereits vorangehend erläutert, verschweißt oder verklebt ist, Ausnehmungen angeordnet. So entsteht ein kronenartig geformter Rand, dessen auskragenden Spitzen oder Laschen punktförmig durch Schweißen oder Kleben mit dem Kühlkörper verbunden sind. Die Ausnehmungen bzw. die Laschen sind so ausgelegt, dass die Kontaktflächen gerade noch ausreichend für eine stabile Befestigung des Hitzeschilds sind.

Eine bevorzugte Ausgestaltung sieht vor, dass ein Rand einer Ausnehmung in einer Stirnseite des Hitzeschildes so ausgeformt ist, dass ein Abstand zwischen Hitzeschild und Kühlkörper im Bereich der Ausnehmung minimiert wird. Weil aus voranstehend beschriebenen Gründen, der Hitzeschild einen Mindestabstand zum Kühlkörper aufweist, entsteht im Bereich der Spitze des Injektors ein Spalt zwischen Kühlkörper und Hitzeschild. Durch diesen Spalt kann Reduktionsmittel eindringen und am Kühlkörper kondensieren. Damit dieser Spalt so gering wie möglich gehalten werden kann und damit auch die Menge an eindringendem Reduktionsmittel, ist es erfindungsgemäß vorgesehen, den Rand der Ausnehmung in der Stirnseite des Hitzeschilds konusförmig nach innen, zum Kühlkörper hin, zu verjüngen und damit den Spalt abzudecken. Weil der Hitzeschild so wenig Kontakt wie möglich zum Kühlkörper haben soll, verbleibt ein kleiner Restspalt zwischen Kühlkörper und Hitzeschild. Es ist denkbar, diesen Spalt mit einem schlecht wärmeleitenden Dichtmittel zu verschließen.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Vorab ist anzumerken, dass funktionsäquivalente Elemente in allen Figuren der Zeichnung jeweils mit den gleichen Ziffern gekennzeichnet und nicht jedes Mal erneut beschrieben sind.

Es zeigen:
- Figur 1: eine schematische Darstellung einer Brennkraftmaschine mit SCR-Einrichtung
- Figur 2: eine schematische Darstellung der erfindungsgemäßen Vorrichtung im Längsschnitt
- Figur 3: eine schematische Außenansicht der erfindungsgemäßen Vorrichtung
- Figur 4: eine erste erfindungsgemäße Ausgestaltung der Vorrichtung
- Figur 5: eine zweite erfindungsgemäße Ausgestaltung der Vorrichtung

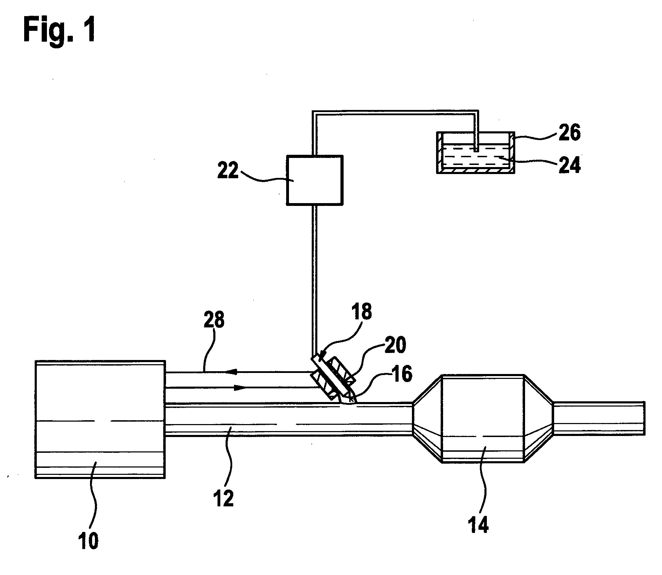

Eine Brennkraftmaschine ist in Figur 1 symbolisch dargestellt und mit dem Bezugszeichen 10 versehen. Heißes Abgas wird durch ein Abgasrohr 12 einem SCR-Katalysator 14 zugeführt. Stromaufwärts von diesem ist an das Abgasrohr 12 ein Stutzen 16 angeformt, an dem eine SCR-Injektionseinrichtung, nachfolgend als Injektor 18 bezeichnet, mit einem Flansch 20 befestigt ist. Über ein Fördermodul 22 umfassend eine Pumpe und eine Ventileinrichtung wird ein flüssiges Reduktionsmittel 24, häufig in Form einer Harnstoff-Wasser-Lösung, die in einem Tank 26 bevorratet ist, dem Injektor 18 zugeführt.

Wenn im Betrieb der Brennkraftmaschine 10 das Reduktionsmittel 24 von dem Injektor 18 in das im Abgasrohr 12 strömende, heiße Abgas in Form von kleinen Tröpfchen eingedüst wird, entsteht aus einer Reaktion des Harnstoffs mit dem Wasser Ammoniak, der anschließend im SCR-Katalysator 14 durch selektive katalytische Reduktion mit Stickstoffmonoxid und Stickstoffdioxid zu molekularem Stickstoff und Wasser umgewandelt wird.

Um die Funktionsfähigkeit des Injektors 18 zu gewährleisten, wird er gekühlt. Das erfolgt bevorzugt mittels eines Kühlwasserstroms 28 der Brennkraftmaschine 10, der durch einen in der Figur nicht dargestellten Kühlkörper des Injektors 18 geleitet wird. Bekannt, jedoch in Figur 1 nicht dargestellt, ist auch eine Kühlung mittels eines Reduktionsmittel-Teilstroms, der wieder in den Tank 26 zurückgeleitet wird.

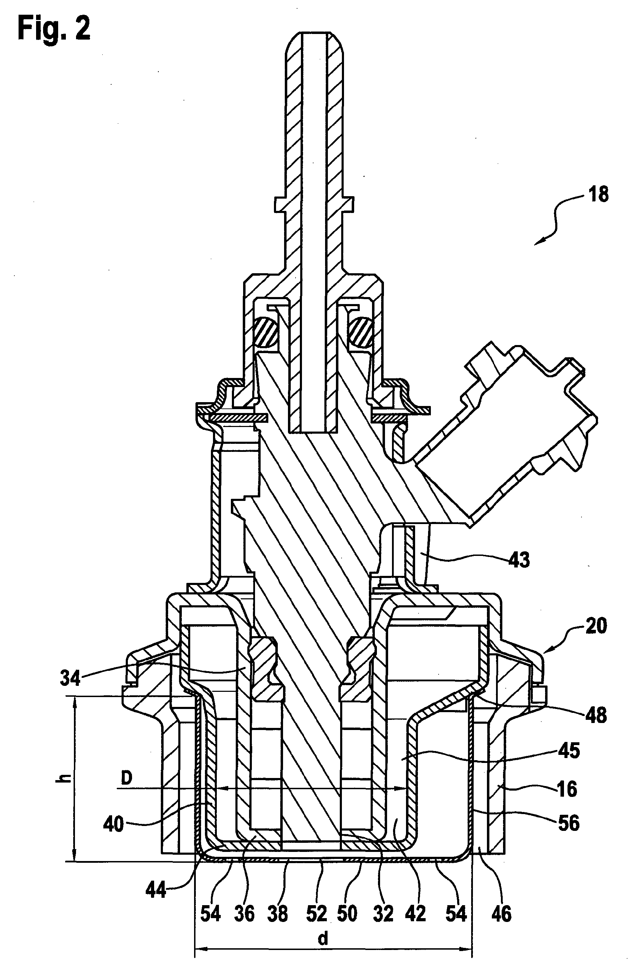

Eine erste Ausführungsform des Injektors 18 wird nun unter Bezugnahme auf Figur 2 näher erläutert: An der Spitze 32 des Injektors 18 ist eine nicht sichtbare Düse vorhanden, die das Reduktionsmittel 24 zu einem feinen Spray vernebelt.

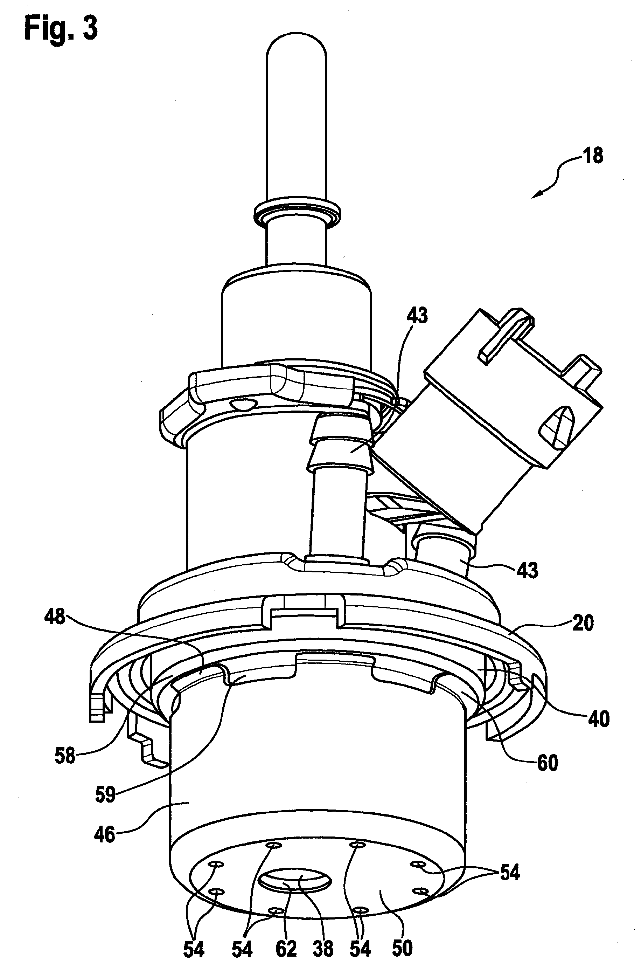

Der Injektor 18 ist am Stutzen 16 des Abgasrohres 12, wie oben bereits erwähnt, mittels des Flanschs 20 befestigt, welcher wiederum in eine dünnwandige becherartig Vertiefung 34 übergeht, die das, dem Abgasrohr 12 zugewandte, Ende des Injektors 18 umschließt. Ein topfartiges Gehäuse 40 ist von außen über die becherartige Vertiefung gestülpt, so dass der Flansch 20 das Gehäuse 40 oben abdichtet. Ein Innendurchmesser D des Gehäuses 40 ist so gewählt, dass sich zwischen Gehäuse 40 und becherartiger Vertiefung 34 ein Hohlraum 42 ausbildet, der über jeweils einen Zu- und Ablaufstutzen 43 mit dem Kühlwasserstrom 28 beaufschlagt wird. Ein erster Boden 36 der becherförmigen Vertiefung 34 und ein zweiter Boden 44 des Gehäuses 40 verfügen jeweils über eine Öffnung 38 durch welche das von der Düse vernebelte Reduktionsmittel 24 in das Abgasrohr 12 gelangt. Der erste Boden 36 und der zweite Boden 44 stehen dabei in Kontakt miteinander, so dass kein Kühlmittel aus dem Hohlraum 42 in die Öffnung 38 gelangt. Somit stellt das mit Kühlmittel durchströmte, Gehäuse 40 einen Kühlkörper 45 für den Injektor 18 dar. Ein zweiter topfartiger Behälter 46 wird ist von außen über den Kühlkörper 45 gestülpt. Ein Innendurchmesser d und eine Höhe h, des Behälters 46 sind dabei so gewählt, dass ein Mindestabstand zum Kühlkörper 45 von 1 mm erreicht wird. An einem oberen Rand 48 ist der Behälter 46, wie nachfolgend anhand von Figur 3 erläutert, mit Ausnehmungen versehen, so dass längliche Laschen oder Spitzen entstehen, die am Gehäuse 40 des Kühlkörpers 45 befestigt werden.

Eine dem Abgasrohr 12 zugewandten Stirnseite 50 des Behälters 46 verfügt über eine große Ausnehmung 52, die deckungsgleich zur Öffnung 38 angeordnet ist und so einen Durchtritt des von der Düse des Injektors 18 vernebelten Reduktionsmittels 24 in das Abgasrohr 12 erlaubt. Sowie über mehrere, an einem äußeren Rand der Stirnseite 50 radial angeordnete, kleinere Ablauföffnungen 54. Insgesamt bildet der Behälter 46 einen Hitzeschild 56 für den Kühlkörper 45.

Figur 3 zeigt die erfindungsgemäße Vorrichtung von außen. Dargestellt ist der Injektor 18 mit Flansch 20. Oberhalb des Flansches 20 angeordnet befinden sich der Zu- und Ablaufstutzen 43 für den Kühlmittelstrom 28. Die Zu- und Ablaufstutzen 43 führen durch den Flansch 20 in das darunter angeordnete Gehäuse 40. An einer Auskragung 58 des Gehäuses 40 schließt der Hitzeschild 56 an. Der obere Rand 48 des Behälters 46 bzw. des Hitzeschilds 56 ist in diesem Ausführungsbeispiel mit regelmäßig angeordneten länglichen Laschen 60 versehen, so dass sich kronenartige Ausstülpungen oder Spitzen ausbilden, an deren Enden der Behälter 46 beispielsweise punktartig mit dem Gehäuse 40 verbunden ist. Denkbar ist dabei einer Verbindung mittels Laserschweißen oder Kleben. Wichtig dabei ist, eine Kontaktfläche zwischen Kühlkörper und Hitzeschild so klein wie möglich zu halten um die Wärmeleitung zu minimieren.

Damit der Hitzeschild 56 durch den Kühlkörper 45 nicht ungewollt gekühlt wird, hat die Stirnseite 50 des Behälters 46 keinen Kontakt zum zweiten Boden 44 des Gehäuses 40. Dadurch entsteht ein Spalt 62 durch den über die Öffnung 38 Reduktionsmittel 24 zwischen Kühlkörper 45 und Hitzeschild 56 gelangt. Um eine Ansammlung von Reduktionsmittel 24 zwischen Kühlkörper 45 und Hitzeschild 56 zu vermeiden, sind radial an einem äußeren Durchmesser der Stirnseite 50 des Behälters 46 eine Vielzahl kleinerer Ablauföffnungen 54 angeordnet, durch die das, durch den Spalt 62 im Bereich der Injektorspitze 32, eingedrungene Reduktionsmittel 24 abläuft, und im Abgasrohr 12 vom heißen Abgas zersetzt wird. Die voranstehend beschriebene Anordnung der Ablauföffnungen 54 ermöglicht das Ablaufen von eingedrungenem Reduktionsmittel 24 unabhängig von einer Einbaulage des Injektors 18.

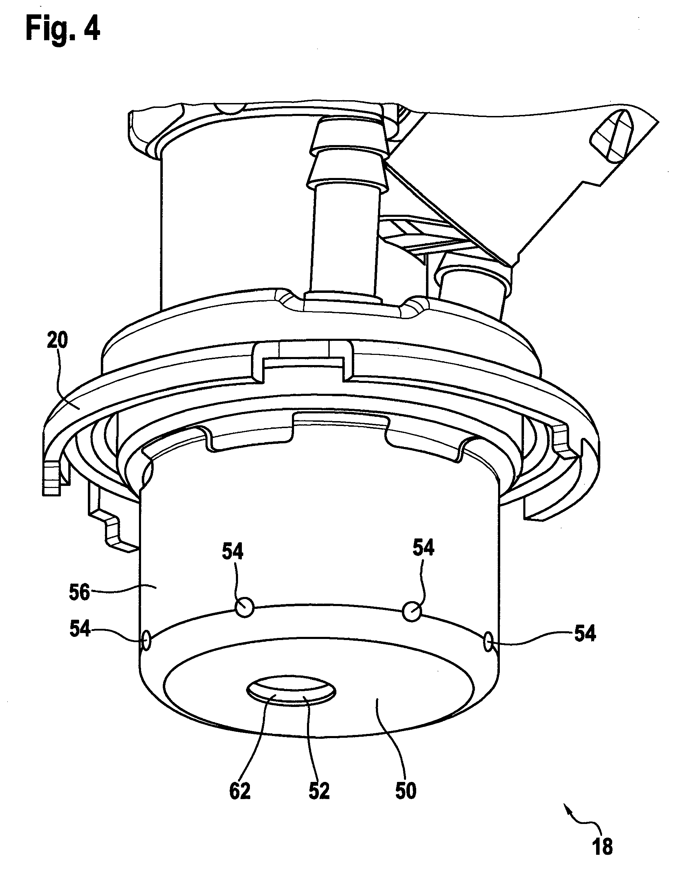

Eine weitere Ausgestaltung des erfindungsgemäßen Hitzeschilds 56 zeigt Figur 4: Der Unterschied zu Figur 3 liegt darin, dass die Ablauföffnungen 54 nicht in der Stirnseite 50 des Behälters 46 angeordnet sind, sondern am Umfang eines dem Abgasrohr 12 zugewandten Ende des Hitzeschildes 56.

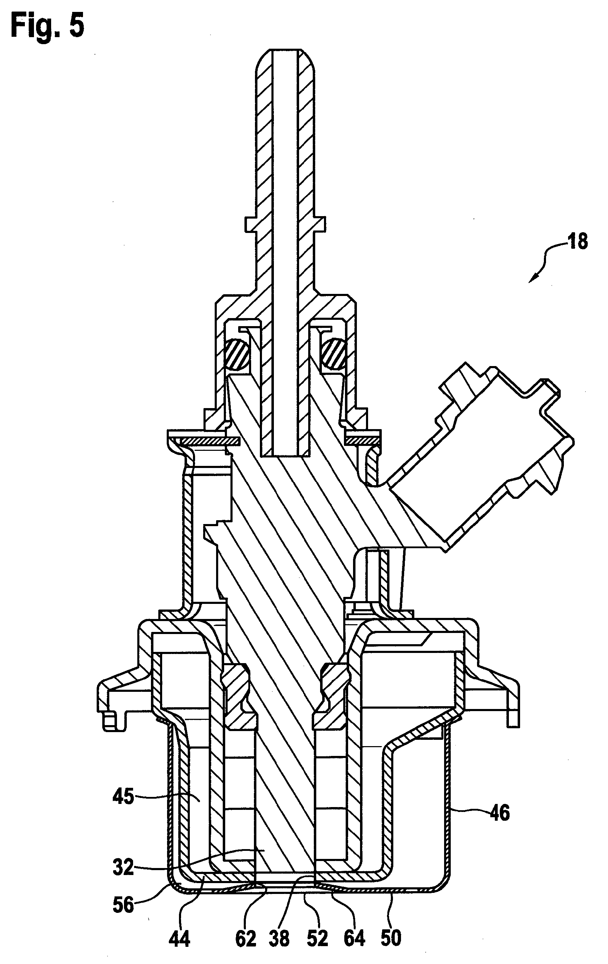

Anhand von Figur 5 wird eine weitere Möglichkeit, wie erfindungsgemäß eine Ansammlung von Reduktionsmittel 24 zwischen Kühlkörper 45 und Hitzeschild 56 zu verringern ist, näher erläutert. Ein Längsschnitt durch die erfindungsgemäße Vorrichtung zeigt den Injektor 18 und den über die Injektorspitze 32 gestülpte Kühlkörper 45 und den Hitzeschild 56. Ein Rand der Ausnehmung 52 im Hitzeschild 56 bildet dabei einen Konus 64, der sich von der Ausnehmung 52 in der Stirnseite 50 des Behälters 46 zu einem Rand der Öffnung 38 im zweiten Boden 44 des Kühlkörpers 45 hin verjüngt. Dadurch wird der Spalt 62 zwischen dem zweiten Boden 44 des Kühlkörpers 45 und der Stirnseite 50 des Behälters 46 im Bereich der Injektorspitze 32 minimiert. Denkbar ist damit auch ein Abdichten des Spaltes 62 mit einem Dichtmittel, das über eine geringe Wärmeleitfähigkeit verfügt.

## Patentansprüche

1. Injektor (18) zum Dosieren von Reduktionsmittel (24) zum Abgas einer Brennkraftmaschine (10), mit einem Kühlkörper (45), der von einem Hitzeschild (56) umschlossen ist, wobei eine Kontaktfläche zwischen Hitzeschild (56) und Kühlkörper (45) derart minimiert ist, dass die Wärmeleitung reduziert und damit eine ungewollte Kühlung des Hitzeschilds verhindert wird, **dadurch gekennzeichnet, dass** der Hitzeschild (56) über eine Vielzahl radial angeordneter Ablauföffnungen (54) verfügt, wobei die Ablauföffnungen in der Stirnseite (50) oder an einem Umfang des Hitzeschilds (56) angeordnet sind.

2. Injektor (18) nach Anspruch 1, **dadurch gekennzeichnet, dass** der Hitzeschild (56) am Kühlkörper (45) mittelbar oder unmittelbar befestigt ist.

3. Injektor (18) nach einem der vorangehenden Ansprüche, **dadurch gekennzeichnet, dass** ein Rand einer Ausnehmung (52) in einer Stirnseite (50) des Hitzeschildes (56) so ausgeformt ist, dass ein Spalt (62) zwischen Hitzeschild (56) und Kühlkörper (45) im Bereich der Ausnehmung (52) minimiert wird, so dass eine durch den Spalt eindringende Menge an Reduktionsmittel so gering wie möglich gehalten werden kann.

## Claims

1. Injector (18) for dosing reducing agent (24) into the exhaust gas of an internal combustion engine (10), having a cooling body (45) which is enclosed by a heat shield (56), wherein a contact area between heat shield (56) and cooling body (45) is minimized such that heat conduction is reduced and thus undesired cooling of the heat shield is prevented, **characterized in that** the heat shield (56) has a multiplicity of radially arranged outflow openings (54), wherein the outflow openings are arranged in the face side (50) or on a circumference of the heat shield (56).

2. Injector (18) according to Claim 1, **characterized in that** the heat shield (56) is fastened indirectly or directly to the cooling body (45).

3. Injector (18) according to one of the preceding claims, **characterized in that** an edge of a recess (52) in a face side (50) of the heat shield (56) is shaped such that a gap (62) between heat shield (56) and cooling body (45) in the region of the recess (52) is minimized, such that an amount of reducing agent penetrating through the gap can be minimized.

## Revendications

1. Injecteur (18) pour doser un agent réducteur (24) dans le gaz d'échappement d'un moteur à combustion interne (10), comprenant un corps de refroidissement (45) qui est entouré par un bouclier thermique (56), une surface de contact entre le bouclier thermique (56) et le corps de refroidissement (45) étant minimisée de telle sorte que la conduction thermique soit réduite et qu'un refroidissement indésirable du bouclier thermique soit donc évité, **caractérisé en ce que** le bouclier thermique (56) dispose d'une pluralité d'ouvertures d'écoulement disposées radialement (54), les ouvertures d'écoulement étant disposées dans le côté frontal (50) ou au niveau d'une périphérie du bouclier thermique (56).

2. Injecteur (18) selon la revendication 1, **caractérisé en ce que** le bouclier thermique (56) est fixé de manière directe ou indirecte au corps de refroidissement (45).

3. Injecteur (18) selon l'une quelconque des revendications précédentes, **caractérisé en ce qu'**un bord d'un évidement (52) est formé dans un côté frontal (50) du bouclier thermique (56) de telle sorte qu'une fente (62) entre le bouclier thermique (56) et le corps de refroidissement (45) dans la région de l'évidement (52) soit minimisée de telle sorte qu'une quantité d'agent réducteur pénétrant à travers la fente puisse être maintenue aussi faible que possible.
